# FASCICULE DE BREVET EUROPEEN

(11) **EP 3 576 258 B1**
(45) Date de publication et mention de la délivrance du brevet: **11.10.2023**
(21) Numéro de dépôt: 19177327.4
(22) Date de dépôt: 29.05.2019
(51) Int. Cl.: H02K 3/51, H02K 5/22, H02K 13/00, H02K 13/02, H02K 7/00

(54) **ARBRE POUR MACHINE ÉLECTRIQUE TOURNANTE, ROTOR ET PROCÉDÉ D'OBTENTION D'UN TEL ROTOR**
WELLE FÜR ELEKTRISCH UMLAUFENDE MASCHINE, ROTOR UND HERSTELLUNGSVERFAHREN EINES SOLCHEN ROTORS
SHAFT FOR A ROTATING ELECTRICAL MACHINE, ROTOR AND METHOD FOR OBTAINING SUCH A ROTOR

(30) Priorité: 31.05.2018 FR 1854708
(43) Date de publication de la demande: 04.12.2019
(73) Titulaire: General Electric Company, Schenectady, NY 12345 (US)
(72) Inventeur: VIRY, Yannick, 54250 CHAMPIGNEULLES (FR); HERBIN, Fabrice, 54250 CHAMPIGNEULLES (FR); SCHNABEL, Benoît, 54250 CHAMPIGNEULLES (FR); VIOLIN, Frédéric, 54250 CHAMPIGNEULLES (FR); HUILLET, Adrien, 54250 CHAMPIGNEULLES (FR)
(74) Mandataire: Casalonga

(56) Documents cités:
- DD-A1- 52 714
- DE-A1- 10 256 974
- US-A- 4 066 921
- US-A1- 2003 209 947

## Description

La présente invention concerne un arbre pour un rotor de machine électrique et concerne également un tel rotor. La présente invention concerne également une machine électrique comprenant un tel rotor. La présente invention se rapporte également à un procédé de fabrication d'un tel rotor.

L'arbre d'une machine électrique tournante peut être foré en son centre pour permettre le passage de câbles d'alimentation électrique isolés.

La section de passage des câbles dans l'arbre est limitée par l'épaisseur minimale de matière nécessaire de sorte que la rigidité de l'arbre soit suffisante pour positionner les modes de flexion et de torsion d'un rotor incorporant l'arbre hors de la plage de vitesses de fonctionnement du rotor et de manière à limiter la flèche de l'arbre en mode moteur ou générateur.

La puissance d'une machine électrique tournante dépend notamment de l'intensité du courant circulant dans les câbles.

Plus la puissance électrique développée par la machine est importante, plus la section des câbles doit être importante pour laisser circuler le courant.

La puissance développée par la machine est donc limitée par la section des câbles d'alimentation.

Pour une machine électrique comportant par exemple un arbre d'un diamètre extérieur de 180 mm, la section maximale réalisable des câbles est dimensionnée pour un courant maximal de 1000 ampères.

De plus, les câbles électriques de grandes sections ont un rayon de courbure nécessitant un volume de dégagement important.

US 2003/209947 divulgue un arbre pour une machine électrique avec des logements comprenant deux portions et s'étendant axialement sur sa surface pour loger un conducteur.

DE 102 56 974 divulgue un arbre pour une machine électrique où les conducteurs sont placés sur sa surface.

US 4066 921 divulgue un arbre pour une machine électrique avec un logement comprenant deux portions et s'étendant axialement sur sa surface pour loger un conducteur multibrins. DD 52 714 divulgue un arbre pour une machine électrique avec des logements comprenant deux portions et s'étendant axialement sur sa surface pour loger un conducteur.

Il est donc proposé de pallier les inconvénients liés au passage de câbles électriques dans un arbre foré d'un rotor de machine électrique tournante selon l'état de la technique, notamment en augmentant l'intensité des courants circulant dans l'arbre et en réduisant le rayon de courbure des câbles électriques.

Au vu de ce qui précède, il est proposé, selon un premier aspect, un arbre pour machine électrique tournante.

L'arbre selon la revendication 1 comprend au moins un logement s'étendant selon une direction axiale et débouchant vers l'extérieur suivant une direction radiale, un coté du logement débouchant vers l'extérieur selon une direction axiale, le logement étant apte à recevoir au moins un conducteur électrique isolé et une cale.

Selon un premier mode de réalisation, le logement est en forme de rainure dont la section transversale perpendiculaire à la direction axiale comprend une portion sensiblement rectangulaire débouchant vers l'extérieur suivant la direction radiale.

Selon un deuxième mode de réalisation, le logement est en forme de rainure dont la section transversale perpendiculaire à la direction axiale comprend une première portion de forme sensiblement rectangulaire débouchant sur une deuxième portion de forme sensiblement trapézoïdale, la deuxième portion débouchant vers l'extérieur suivant une direction radiale.

De préférence, la deuxième portion de forme sensiblement trapézoïdale comporte une petite base radialement extérieure et une grande base, la petite base étant disposée à l'extérieur de la grande base suivant la direction radiale de sorte qu'un conducteur électrique isolé puisse être inséré dans la première portion suivant une direction radiale de l'arbre en passant par la deuxième portion.

Avantageusement, le nombre et les dimensions des logements sont déterminés de sorte que l'arbre soit suffisamment rigide pour transmettre un couple prédéterminé lors du fonctionnement de la machine électrique tournante fonctionnant en mode moteur ou générateur, de sorte que les modes de flexion et de torsion d'un rotor incorporant l'arbre soient hors de la plage de vitesses de fonctionnement du rotor et de manière à limiter la flèche de l'arbre à une valeur prédéterminée.

Selon une autre caractéristique, l'arbre comprend au moins deux logements, les angles selon la direction axiale entre deux barycentres de deux logements adjacents étant de valeur égale.

Il est proposé, selon un autre aspect, un rotor pour machine électrique tournante comprenant un arbre tel que défini précédemment et des conducteurs électriques isolés de sorte que chaque portion comprend un même nombre de conducteurs électriques de manière à remplir chaque portion.

Selon un premier mode de réalisation, l'arbre comprend une portion et le rotor comprend en outre une bague inséré sur l'arbre selon la direction axiale de sorte que l'arbre et la bague sont solidarisés par frettage, chaque portion comprenant en outre une cale disposée entre le conducteur électrique isolé et la bague de manière à empêcher un déplacement du conducteur dans la portion.

Selon un deuxième mode de réalisation, l'arbre comprend une première et une deuxième portions, la deuxième portion comprenant en outre une cale de manière à empêcher un déplacement des conducteurs dans la portion et de sorte qu'un jeu sépare l'extrémité libre de la cale et une périphérie extérieur de l'arbre.

Avantageusement, la première portion comprend des conducteurs électriques isolés séparés par la cale s'étendant dans la première portion.

De préférence, les conducteurs électriques isolés comprennent des barres métalliques, notamment en cuivre, recouvertes d'un isolant électrique ou des câbles électriques recouverts d'un isolant électrique.

Il est proposé, selon un autre aspect, une machine électrique tournante comprenant un rotor tel que défini précédemment.

Il est proposé, selon encore un autre aspect, un procédé d'obtention d'un rotor pour machine électrique tournante en accord avec la revendication 8.

On insère des conducteurs électriques isolés dans des premières portions d'un arbre selon une direction radiale de l'arbre.

Selon un premier mode de mise en oeuvre, on insère une cale dans chacune des premières portions selon une direction radiale de manière à empêcher un déplacement des conducteurs dans la première portion, on insère une bague sur l'arbre de sorte que l'arbre soit solidarisé avec la bague par frettage, on usine l'extérieur de la bague puis on insère la bague intérieure d'un roulement par frettage sur cette bague.

Selon un deuxième mode de mise en oeuvre, on insère une cale dans chacune des deuxièmes portions selon une direction axiale de manière à empêcher un déplacement des conducteurs dans la première portion et de sorte qu'un jeu sépare l'extrémité libre de la cale et une périphérie extérieur de l'arbre, et l'on insère par frettage la bague intérieure d'un roulement sur l'arbre.

D'autres caractéristiques et avantages de l'invention apparaîtront à la lecture de la description qui suit de modes de réalisation de l'invention, donnés uniquement à titre d'exemples non limitatifs et en référence aux dessins sur lesquels :
- la figure 1 illustre un mode de réalisation d'une machine électrique tournante ;
- les figures 2, 3 et 4 illustrent un premier mode de réalisation d'un rotor ;
- la figure 5 illustre un procédé d'obtention d'un rotor selon le premier mode de réalisation;
- les figures 6 et 7 illustrent un deuxième mode de réalisation d'un rotor ;
- la figure 8 illustre un procédé d'obtention d'un rotor selon le deuxième mode de réalisation;
- la figure 9 illustre un deuxième mode de réalisation d'un conducteur électrique isolé ; et
- la figure 10 illustre un deuxième mode de réalisation d'une cale.

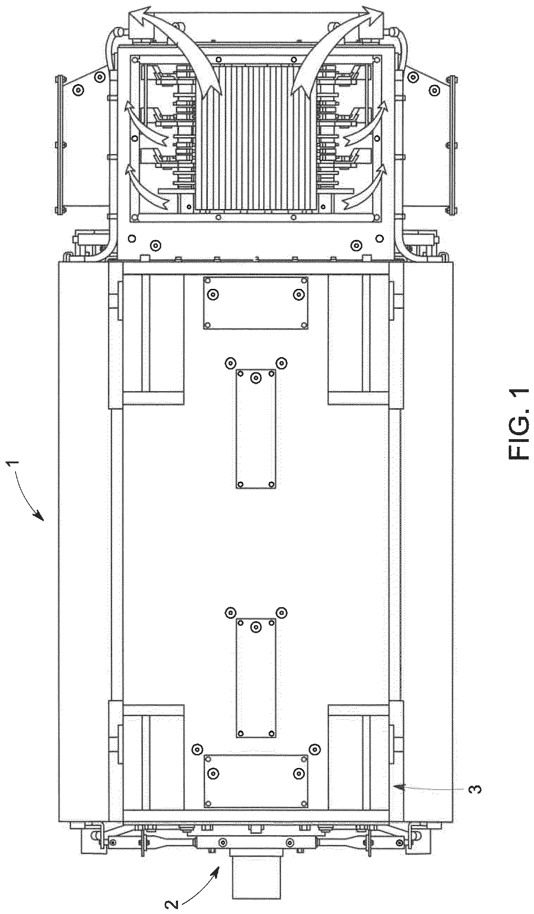

On se réfère à la figure 1 qui illustre une machine électrique tournante 1 comprenant un rotor 2 inséré dans une carcasse 3.

La machine 1 peut être par exemple une machine synchrone, une machine polyphasée.

Dans ce qui suit, la machine 1 est une machine électrique tournante triphasée.

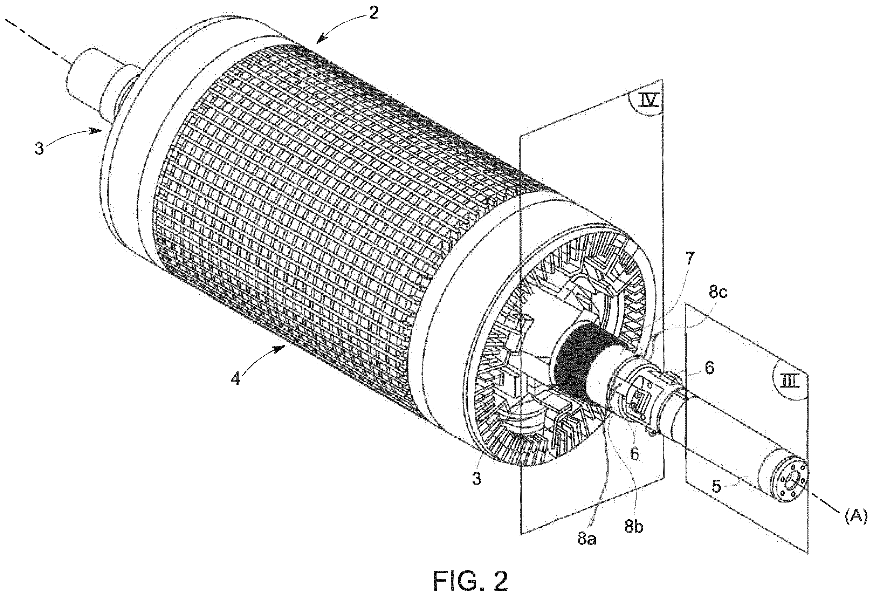

On se réfère à présent aux figures 2, 3 et 4 qui illustrent un premier mode de réalisation du rotor 2.

On se réfère plus particulièrement à la figure 2 qui illustre le rotor 2 comprenant des roulements 3 et un ensemble de tôles magnétiques et de bobinages 4 enserrant un arbre 5.

Les roulements 3 peuvent être par exemple des roulements à aiguilles, à rouleaux ou des roulements à billes comme représenté ici ou être composé par un ensemble de roulements.

Le roulement 3 comprend une bague intérieure 3a et une bague extérieure 3b.

L'arbre 5 comprend un axe (A) confondu avec l'axe de rotation de l'arbre, des conducteurs électriques isolés 6, au moins une bague 7, et trois logements 8a, 8b et 8c s'étendant selon la direction axiale (A) et débouchant vers l'extérieur suivant une direction radiale de l'arbre 5.

L'arbre 5 est réalisé en un matériau métallique, par exemple en acier.

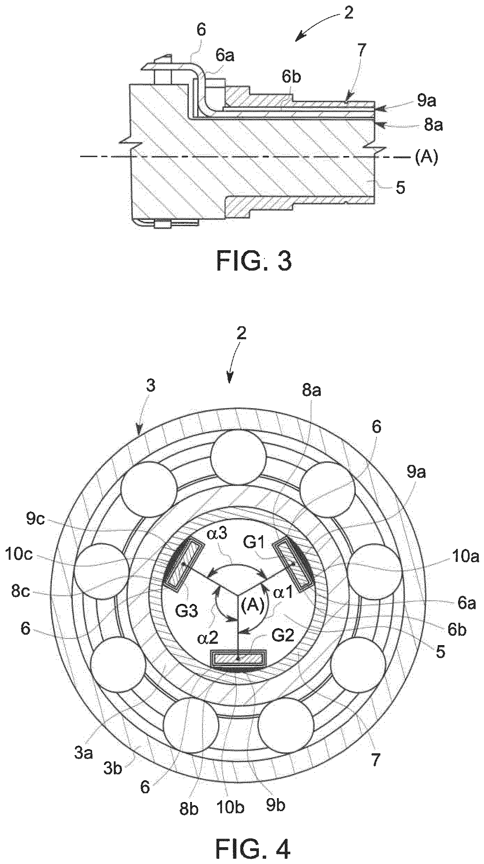

Les figures 3 et 4 représentent respectivement une coupe partielle du rotor 2 selon un plan (III) passant par l'axe (A) et une coupe partielle du rotor 2 selon un plan (IV) perpendiculaire à l'axe (A) et passant par le centre d'un roulement 3.

Les trois logements 8a, 8b et 8c sont identiques.

Chaque logement 8a, 8b et 8c est en forme de rainure dont la section transversale perpendiculaire à la direction axiale (A) comprend une portion 10a, 10b et 10c de forme sensiblement rectangulaire débouchant vers l'extérieur suivant la direction radiale et un coté du logement débouchant vers l'extérieur selon la direction axiale.

Chaque portion 10a, 10b et 10c accueille un conducteur 6.

Chaque conducteur 6 correspond ici à une phase différente de la machine triphasée 1.

Le nombre et les dimensions des logements 8a, 8b et 8c sont déterminés de sorte que l'arbre 5 soit suffisamment rigide pour transmettre un couple prédéterminé lors du fonctionnement de la machine 1 en mode moteur ou générateur, de sorte que les modes de flexion et de torsion du rotor 2 soient hors de la plage de vitesses de fonctionnement du rotor et de manière à limiter la flèche de l'arbre 5 à une valeur prédéterminée.

La valeur prédéterminée de la flèche est déterminée selon la distance de l'entrefer de la machine 1.

Par exemple, la valeur prédéterminée est égale à 10% de la distance de l'entrefer.

Le nombre et les dimensions des logements 8a, 8b et 8c sont déterminés par exemple à l'aide d'un algorithme d'optimisation topologique.

Selon d'autres modes de réalisation, l'arbre 5 peut comprendre deux logements ou plus.

Le conducteur électrique isolé 6 comprend une barre métallique conductrice 6a, par exemple en cuivre, recouverte d'un isolant électrique 6b.

Selon un autre mode de réalisation, le conducteur 6 comprend au moins un câble électrique recouvert d'un isolant électrique.

La bague 7 est insérée sur l'arbre selon la direction axiale (A) de sorte qu'un périmètre intérieur de la bague soit solidarisé à l'arbre.

La bague 7 est insérée sur l'arbre 5 par frettage.

Chaque portion 10a, 10b et 10c comprend en outre une cale 9a, 9b et 9c disposée entre le conducteur électrique isolé 6 et la bague 7 de manière à empêcher un déplacement du conducteur 6 dans la portion.

La cale 9a, 9b et 9c est dimensionnée pour compenser un éventuel jeu entre la bague 7 et le conducteur 6 de sorte que le conducteur 6 soit immobilisé dans le logement 8a, 8b et 8c lorsque la bague enserre l'arbre 5.

La cale 9a, 9b et 9c empêche un déplacement du conducteur 6 sous l'effet de la force centrifuge lors de la rotation du rotor 2. Un déplacement du conducteur 6 serait sinon susceptible d'endommager par abrasion l'isolant électrique 6b entraînant un contact électrique non souhaité entre la barre conductrice 6a et l'arbre 5.

Un périmètre extérieur de la bague 7 et la bague intérieur 3a du roulement 3 sont solidarisés de sorte que l'arbre 5 tourne par rapport à la bague extérieure 3b.

Selon un autre mode de réalisation, chaque logement 8a, 8b et 8c peut comprendre plusieurs conducteurs électriques isolés 6 de manière à remplir la portion 10a, 10b et 10c, chaque portion comprenant le même nombre de conducteurs 6.

Les trois logements 8a, 8b et 8c sont disposées sur l'arbre 5 de sorte que les angles α1, α2 et α3 selon la direction radiale (A) entre respectivement deux barycentres G1 et G2, G2 et G3, G3 et G1 de deux portions adjacentes 10a et 10b, 10b et 10c, 10c et 10a sont de valeur égale.

Comme l'arbre 5 comprend trois portions 10a, 10b et 10c, la valeur de chaque angle α1, α2 et α3 est égale à 120°.

Une répartition angulaire uniforme des logements 8a, 8b et 8c dans l'arbre 5 permet d'équilibrer l'arbre.

Le rotor 2 est équilibré de sorte que les phénomènes vibratoires détériorant notamment les roulements 3 sont minimisés.

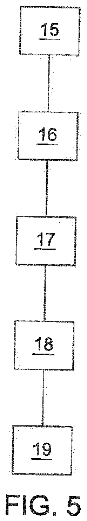

On se réfère à présent à la figure 5 qui illustre un procédé d'obtention du rotor 2 selon le premier mode de réalisation.

Lors d'une étape 15, un conducteur 6 est inséré selon une direction radiale de l'arbre 5 dans chaque portion 10a, 10b et 10c de l'arbre 5 par le coté du logement débouchant vers l'extérieur.

Lors d'une étape 16, une cale 9a, 9b et 9c est insérée selon la direction radiale dans chaque portion 10a, 10b et 10c de manière à empêcher un déplacement de chaque conducteur 6 dans les portions.

Dans une étape 17, la bague 7 est insérée par frettage sur l'arbre 5.

Lors d'une étape 18, le périmètre extérieur de la bague 7 est usiné de sorte que dans une étape ultérieure un roulement 3 soit inséré sur le périmètre extérieur de la bague 7.

Lors d'une étape 19, la bague intérieur 3a du roulement 3 est inséré par frettage sur la bague 7.

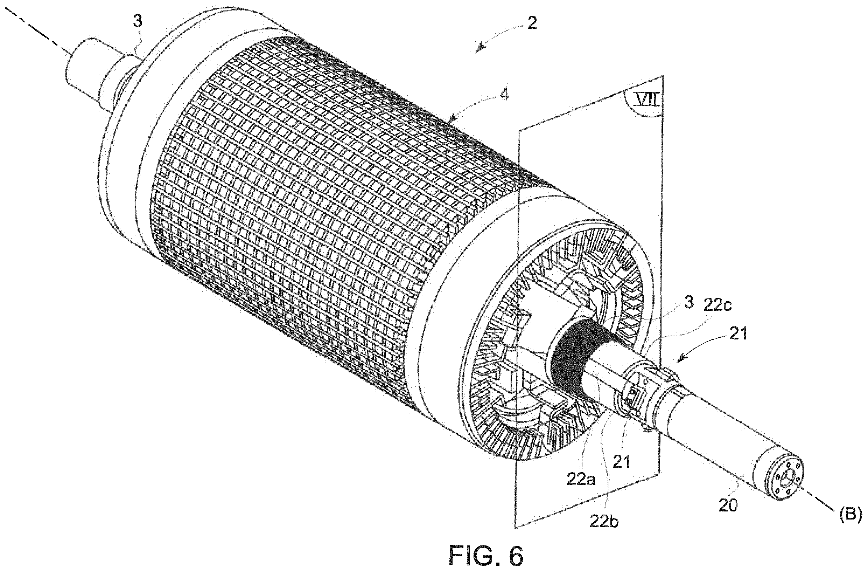

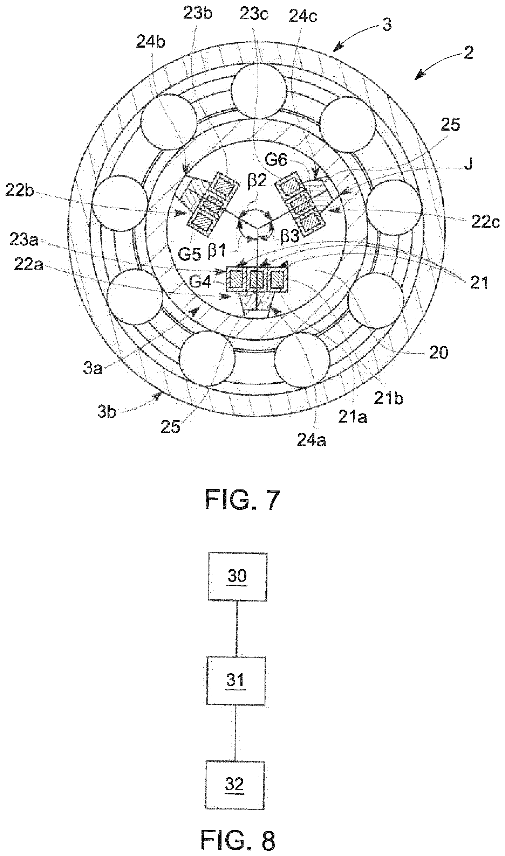

On se réfère à présent aux figures 6 et 7 qui illustrent un deuxième mode de réalisation préférentiel du rotor 2.

On se réfère plus particulièrement à la figure 6 qui illustre le rotor 2 comprenant les roulements 3 et un ensemble de tôles magnétiques et de bobinages 4 enserrant un arbre 20.

L'arbre 20 comprend un axe (B) confondu avec l'axe de rotation de l'arbre, des conducteurs électriques isolés 21 et trois logements 22a, 22b et 22c s'étendant selon la direction axiale (B) et débouchant vers l'extérieur suivant une direction radiale de l'arbre 20.

L'arbre 20 est réalisé en un matériau métallique, par exemple en acier.

La figure 7 représente une coupe partielle du rotor 2 selon un plan (VII) perpendiculaire à l'axe (B) et passant par le centre d'un roulement 3.

Les trois logements 22a, 22b et 22c sont identiques.

Chaque logement 22a, 22b et 22c est en forme de rainure dont la section transversale perpendiculaire à la direction axiale (B) comprend une première portion 23a, 23b et 23c de forme sensiblement rectangulaire débouchant sur une deuxième portion 24a, 24b et 24c de forme sensiblement trapézoïdale, la deuxième portion débouchant vers l'extérieur suivant une direction radiale.

Un coté de chacun des logements débouche vers l'extérieur selon la direction axiale (B).

La deuxième portion 24a, 24b et 24c est sensiblement trapézoïdale et comporte une petite base radialement extérieure et une grande base, la petite base étant disposée à l'extérieur de la grande base suivant la direction radiale.

Chaque première portion 23a, 23b et 23c accueille le même nombre de conducteurs électriques isolés 21 de manière à remplir la première portion, par exemple trois conducteurs 21, comme représenté.

La dimension de la petite base est déterminée de sorte qu'un conducteur électrique isolé 21 puisse être inséré dans la première portion 23a, 23b et 23c suivant une direction radiale de l'arbre 20 en passant par la deuxième portion 24a, 24b et 24c.

Le nombre et les dimensions des logements 22a, 22b et 22c sont déterminés de sorte que l'arbre 5 soit suffisamment rigide pour transmettre un couple prédéterminé lors du fonctionnement de la machine 1 en mode moteur ou générateur, de sorte que les modes de flexion et de torsion du rotor 2 soient hors de la plage de vitesses de fonctionnement du rotor et de manière à limiter la flèche de l'arbre 20 à une valeur prédéterminée.

La valeur prédéterminée de la flèche est déterminée selon la distance de l'entrefer de la machine 1.

Par exemple, la valeur prédéterminée est égale à 10% de la distance de l'entrefer.

Le nombre et les dimensions des logements 22a, 22b et 22c sont déterminés par exemple à l'aide d'un algorithme d'optimisation topologique.

Selon d'autres modes de réalisation, l'arbre 20 peut comprendre deux logements ou plus.

Le conducteur électrique isolé 21 comprend une barre métallique conductrice 21a, par exemple en cuivre recouverte d'un isolant électrique 21b.

Une cale 25 est insérée dans chaque deuxième portion 24a, 24b et 24c de manière à empêcher un déplacement des conducteurs 21 dans la première portion 23a, 23b et 23c et de sorte qu'un jeu J sépare l'extrémité libre de la cale et une périphérie extérieur de l'arbre 20.

La cale 25 empêche le déplacement des conducteurs 21 dans la première portion lors de la rotation du rotor 2.

En l'absence de la cale 25, le déplacement du conducteur 21 serait susceptible d'endommager l'isolant électrique 21b entraînant un contact électrique non souhaité entre la barre conductrice 21a et l'arbre 20.

Un périmètre extérieur de l'arbre 20 et la bague intérieure 3a du roulement 3 sont solidarisés par frettage de sorte que l'arbre 20 tourne par rapport à la bague extérieure 3b.

Les trois logements 22a, 22b et 22c sont disposées sur l'arbre 20 de sorte que les angles β1, β2 et β3 selon la direction radiale (B) entre respectivement deux barycentres G4 et G5, G5 et G6, G6 et G4 de deux logements adjacentes 22a et 22b, 22b et 22c, 22c et 22a sont de valeur égale.

Comme l'arbre 20 comprend trois logements 22a, 22b et 22c, la valeur de chacun des angles β1, β2 et β3 est égale à 120°.

Une répartition angulaire uniforme des logements 22a, 22b et 22c dans l'arbre 20 permet d'équilibrer l'arbre.

Le rotor 2 est équilibré de sorte que les phénomènes vibratoires détériorant notamment les roulements 3 sont minimisés.

On se réfère à présent à la figure 8 qui illustre un procédé d'obtention du rotor 2 selon le deuxième mode de réalisation.

Lors d'une étape 30, les conducteurs 21 sont insérés selon une direction radiale de l'arbre 20 dans chaque première portion 23a, 23b et 23c de l'arbre 20 par le coté du logement débouchant vers l'extérieur.

Lors d'une étape 31, une cale 25 est insérée selon la direction axiale (B) dans chaque deuxième portion 24a, 24b et 24c de manière à empêcher un déplacement de chaque conducteur 21 dans les premières portions et de sorte qu'un jeu J sépare l'extrémité libre de la cale et une périphérie extérieur de l'arbre 20.

La cale 25 est insérée par le coté du logement débouchant vers l'extérieur.

Dans une étape 32, la bague intérieure 3a du roulement 3 est insérée par frettage sur l'arbre 20.

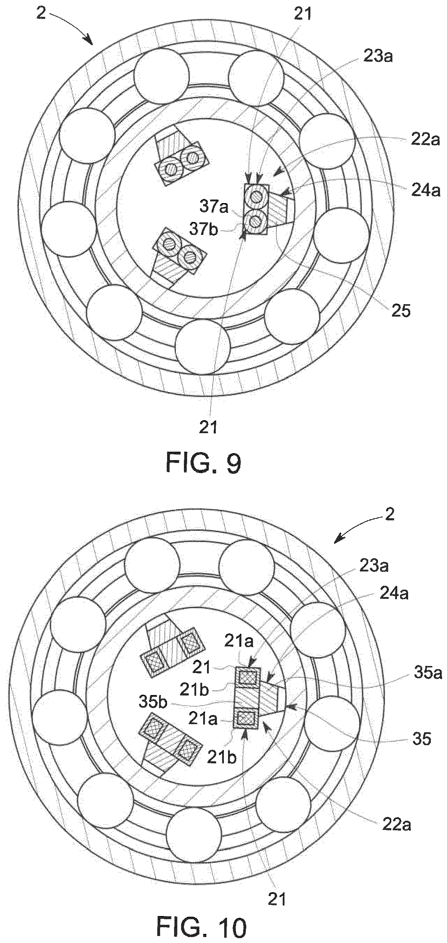

Selon un autre mode de réalisation du conducteur électrique isolé 21 représenté à la figure 9, le conducteur 21 comprend au moins un câble électrique 37a, par exemple en cuivre, recouvert d'un isolant électrique 37b.

Chaque première portion 23a, 23b et 23c comprend ici deux conducteurs 21.

La section des câbles et le nombre de câbles sont choisis de manière à optimiser la section de passage des courants et minimiser le rayon de courbure des câbles. Il s'agit de trouver un compromis entre ces deux critères.

Les câbles sont employés par exemple lorsque le rotor requiert de faibles courants.

On se réfère à présent à la figure 10 qui illustre un autre mode de réalisation de la cale 25.

La première portion 23a, 23b et 23c du logement comprend deux conducteurs 21.

La cale 35 comprend une première partie 35a identique à la cale 25 décrite précédemment et une deuxième partie 35b s'étendant dans la première portion 23a, 23b et 23c de sorte que les deux conducteurs électriques isolés sont séparés par la cale 35.

Avantageusement, les logements dans l'arbre permettent d'augmenter les sections de passage des courants sans compromettre la rigidité de l'arbre tout en réduisant ou supprimant l'espace nécessaire pour recourber les câbles.

Par exemple, pour un arbre de diamètre extérieur de 180 mm d'une machine électrique tournante de 4 MW, des courants jusqu'à 1700 ampères peuvent circuler dans l'arbre.

De plus, dans le second mode de réalisation, si un conducteur électrique isolé est défaillant, il suffit de retirer les roulements et retirer la cale située au-dessus du conducteur défaillant pour accéder audit conducteur. Dans ce mode de réalisation, une étape d'usinage est supprimée dans le procédé d'obtention du rotor.

Enfin, les barres conductrices permettent d'optimiser la section de passage du courant en remplissant complètement la portion de chacun des logements contrairement aux câbles qui laissent des espaces vides.

## Revendications

1. Arbre pour machine électrique tournante comprenant au moins un logement (22a, 22b, 22c) s'étendant selon une direction axiale (B) et débouchant vers l'extérieur suivant une direction radiale, un coté du logement débouchant vers l'extérieur selon une direction axiale, le logement étant apte à recevoir au moins un conducteur électrique isolé (21, 37a, 37b) et une cale (25, 35) dans lequel le logement (22a, 22b, 22c) est en forme de rainure dont la section transversale perpendiculaire à la direction axiale comprend une première portion (23a, 23b, 23c) de forme sensiblement rectangulaire débouchant sur une deuxième portion (24a, 24b, 24c) de forme sensiblement trapézoïdale, la deuxième portion débouchant vers l'extérieur suivant une direction radiale la deuxième portion (24a, 24b, 24c) de forme sensiblement trapézoïdale comportant une petite base radialement extérieure et une grande base, la petite base étant disposée à l'extérieur de la grande base suivant la direction radiale de sorte qu'un conducteur électrique isolé puisse être inséré dans la première portion (23a, 23b, 23c) suivant une direction radiale de l'arbre en passant par la deuxième portion (24a, 24b, 24c), **caractérisé en ce que** la première portion est configurée pour accueillir plusieurs conducteurs électriques isolés (21, 37a, 37b) de manière à remplir la première portion, la dimension de la petite base étant déterminée de sorte qu'un seul conducteur électrique isolé (21, 37a, 37b) puisse être inséré dans la première portion (23a, 23b, 23c) suivant une direction radiale de l'arbre en passant par la deuxième portion (24a, 24b, 24c).

2. Arbre selon la revendication 1, comprenant au moins deux logements (22a, 22b, 22c), les angles (β1, β2, β3) selon la direction axiale (B) entre deux barycentres de deux logements (22a, 22b, 22c) adjacentes étant de valeur égale.

3. Rotor pour machine électrique tournante comprenant un arbre selon l'une quelconque des revendications précédentes et des conducteurs électriques isolés de sorte que chaque portion comprend un même nombre de conducteurs électriques (21, 37a, 37b) de manière à remplir chaque portion (23a, 23b, 23c).

4. Rotor selon la revendication 3, dans lequel l'arbre (20) comprend une première (23a, 23b, 23c) et une deuxième (24a, 24b, 24c) portions, la deuxième portion comprenant en outre une cale (25) de manière à empêcher un déplacement des conducteurs dans la portion et de sorte qu'un jeu (J) sépare l'extrémité libre de la cale et une périphérie extérieure de l'arbre.

5. Rotor selon la revendication 4, dans lequel la première portion (23a, 23b, 23c) comprend des conducteurs électriques isolés (21) séparés par la cale (35) s'étendant dans la première portion.

6. Rotor selon l'une des revendications 3 à 5, dans lequel les conducteurs électriques isolés (21, 37a, 37b) comprennent des barres métalliques (21a), notamment en cuivre, recouvertes d'un isolant électrique (21b) ou des câbles électriques (37a) recouverts d'un isolant électrique (37b).

7. Machine électrique tournante comprenant un rotor selon l'une des revendications 3 à 6.

8. Procédé d'obtention d'un rotor pour machine électrique tournante, dans lequel on insère des conducteurs électriques isolés (21, 37a, 37b) et des cales (25) dans des logements ( 22a, 22b, 22c) d'un arbre selon une direction radiale de l'arbre, chaque logement (22a, 22b, 22c) étant en forme de rainure dont la section transversale perpendiculaire à la direction axiale comprend une première portion (23a, 23b, 23c) de forme sensiblement rectangulaire débouchant sur une deuxième portion (24a, 24b, 24c) de forme sensiblement trapézoïdale, la deuxième portion débouchant vers l'extérieur suivant une direction radiale, dans lequel les conducteurs électriques isolés sont insérés dans les premières portions (23a, 23b, 23c) des logements (22a, 22b, 22c) selon la direction radiale et les cales (25, 35) dans les deuxièmes portions (24a, 24b, 24c) des logements (22a, 22b, 22c) selon une direction axiale de manière à empêcher un déplacement des conducteurs dans la première portion et de sorte qu'un jeu sépare l'extrémité libre de la cale et une périphérie extérieure de l'arbre, et dans lequel on insère par frettage la bague intérieure d'un roulement sur l'arbre, **caractérisé en ce que** chaque première portion accueille plusieurs conducteurs électriques isolés (21, 37a, 37b) de manière à remplir la première portion, la dimension de la petite base étant déterminée de sorte qu'un seul conducteur électrique isolé (21, 37a, 37b) puisse être inséré dans la première portion (23a, 23b, 23c) suivant une direction radiale de l'arbre en passant par la deuxième portion (24a, 24b, 24c).

## Patentansprüche

1. Welle für eine rotierende elektrische Maschine, die mindestens einen Sitz (22a, 22b, 22c) umfasst, der sich in axialer Richtung (B) erstreckt und einer radialen Richtung folgend nach außen mündet, wobei eine Seite des Sitzes in axialer Richtung nach außen mündet, wobei der Sitz dazu geeignet ist, mindestens einen isolierten elektrischen Leiter (21, 37a, 37b) aufzunehmen und einen Keil (25, 35), wobei der Sitz (22a, 22b, 22c) nutförmig ist und dessen Querschnitt perpendikular zur axialen Richtung einen ersten Abschnitt (23a, 23b, 23c) von im Wesentlichen rechteckiger Form umfasst, der zu einem zweiten im Wesentlichen trapezförmigen Abschnitt (24a, 24b, 24c) ausmündet, wobei der zweite Abschnitt, der nach außen mündet und einer radialen Richtung des zweiten Abschnitt (24a, 24b, 24c) folgt, der im Wesentlichen trapezförmig ist, eine kleine radial außenliegende Basis beinhaltend, und eine große Basis, wobei die kleine Basis außerhalb der großen Basis angeordnet ist und der radialen Richtung so folgt, dass ein isolierter elektrischer Leiter in den ersten Abschnitt (23a, 23b, 23c) eingeführt werden kann, einer radialen Richtung der Welle folgend und am zweiten Abschnitt (24a, 24b, 24c) vorbeilaufend, **dadurch gekennzeichnet, dass** der erste Abschnitt konfiguriert ist, um mehrere isolierte elektrische Leiter (21, 37a, 37b) aufzunehmen, um den ersten Abschnitt zu füllen, wobei die Größe der kleinen Basis so bestimmt ist, dass ein einzelner isolierter elektrischer Leiter (21, 37a, 37b) in den ersten Abschnitt (23a, 23b, 23c) eingeführt werden kann, einer radialen Richtung der Welle folgend und am zweiten Abschnitt (24a, 24b, 24c) vorbeilaufend.

2. Welle nach Anspruch 1, mindestens zwei Sitze (22a, 22b, 22c) umfassend, wobei die Winkel (β1, β2, β3) entlang der axialen Richtung (B) zwischen zwei Baryzentren zweier benachbarter Sitze (22a, 22b, 22c) von gleichem Wert sind.

3. Rotor für eine rotierende elektrische Maschine, eine Welle nach einem der vorhergehenden Ansprüche umfassend und isolierte elektrische Leiter, so dass jeder Abschnitt die gleiche Anzahl von elektrischen Leitern (21, 37a, 37b) umfasst, um jeden Abschnitt (23a, 23b, 23c) zu füllen.

4. Rotor nach Anspruch 3, wobei die Welle (20) einen ersten (23a, 23b, 23c) und einen zweiten (24a, 24b, 24c) Abschnitt umfasst, wobei der zweite Abschnitt ferner einen Keil (25) umfasst, um eine Verschiebung der Leiter im Abschnitt zu verhindern, und so dass ein Spielraum (J) das freie Ende des Keils und einen äußeren Umfang der Welle trennt.

5. Rotor nach Anspruch 4, wobei der erste Abschnitt (23a, 23b, 23c) isolierte elektrische Leiter (21) umfasst, die durch den Keil (35) getrennt sind, der sich im ersten Abschnitt erstreckt.

6. Rotor nach einem der Ansprüche 3 bis 5, wobei die isolierten elektrischen Leiter (21, 37a, 37b) Metallstäbe (21a), insbesondere aus Kupfer, umfassen, die mit einem elektrischen Isolator (21b) bedeckt sind, oder elektrische Kabel (37a), die mit einem elektrischen Isolator (37b) bedeckt sind.

7. Rotierende elektrische Maschine, die einen Rotor umfasst, nach einem der Ansprüche 3 bis 6.

8. Verfahren zur Herstellung eines Rotors für eine rotierende elektrische Maschine, wobei isolierte elektrische Leiter (21, 37a, 37b) und Keile (25) in den Sitz (22a, 22b, 22c) einer Welle in einer radialen Richtung der Welle eingesetzt werden, wobei jeder Sitz (22a, 22b, 22c) nutförmig ist, und dessen Querschnitt perpendikular zur axialen Richtung einen ersten Abschnitt (23a, 23b, 23c) von im Wesentlichen rechteckiger Form umfasst, der zu einem zweiten im Wesentlichen trapezförmigen Abschnitt (24a, 24b, 24c) ausmündet, wobei der zweite nach außen mündende Abschnitt einer radialen Richtung folgt, wobei die isolierten elektrischen Leiter in den ersten Abschnitten (23a, 23b, 23c) der Sitze (22a, 22b, 22c) eingeführt sind, in radialer Richtung, und die Keile (25, 35) in den zweiten Abschnitten (24a, 24b, 24c) der Sitze (22a, 22b, 22c), in axialer Richtung, um eine Verschiebung der Leiter im ersten Abschnitt zu verhindern, und so dass ein Spielraum das freie Ende des Keils und einen äußeren Umfang der Welle trennt, und wobei der Innenring eines Lagers durch Schrumpfen auf die Welle gesetzt wird, **dadurch gekennzeichnet, dass** jeder erste Abschnitt mehrere isolierte elektrische Leiter (21, 37a, 37b) aufnimmt, um den ersten Abschnitt zu füllen, wobei die Größe der kleinen Basis so bestimmt ist, dass ein einzelner isolierter elektrischer Leiter (21, 37a, 37b) in den ersten Abschnitt (23a, 23b, 23c) eingeführt werden kann, einer radialen Richtung der Welle folgend und am zweiten Abschnitt (24a, 24b, 24c) vorbeilaufend.

## Claims

1. Shaft for a rotating electrical machine comprising at least one housing element (22a, 22b, 22c) extending in an axial direction (B) and leading to the outside in a radial direction, one side of the housing element leading to the outside in an axial direction, the housing element being able to receive at least one insulated electrical conductor (21, 37a, 37b) and a spacer (25, 35), wherein the housing element (22a, 22b, 22c) is in the form of a groove whose cross-section perpendicular to the axial direction comprises a first portion (23a, 23b, 23c) that is substantially rectangular in shape leading to a second portion (24a, 24b, 24c) that is substantially trapezoidal in shape, the second portion leading to the outside in a radial direction, the second portion (24a, 24b, 24c) that is substantially trapezoidal in shape including a radially outer small base and a large base, the small base being disposed outside the large base in the radial direction such that an insulated electrical conductor can be inserted into the first portion (23a, 23b, 23c) in a radial direction of the shaft through the second portion (24a, 24b, 24c), **characterised in that** the first portion is configured to receive a plurality of insulated electrical conductors (21, 37a, 37b) so as to fill the first portion, the size of the small base being determined such that a single insulated electrical conductor (21, 37a, 37b) can be inserted into the first portion (23a, 23b, 23c) in a radial direction of the shaft through the second portion (24a, 24b, 24c).

2. Shaft according to claim 1, comprising at least two housing elements (22a, 22b, 22c), the angles (β1, β2, β3) in the axial direction (B) between two centres of mass of two adjacent housing elements (22a, 22b, 22c) being of equal value.

3. Rotor for a rotating electrical machine comprising a shaft according to any one of the preceding claims and comprising insulated electrical conductors such that each portion comprises the same number of electrical conductors (21, 37a, 37b) so as to fill each portion (23a, 23b, 23c).

4. Rotor according to claim 3, wherein the shaft (20) comprises a first portion (23a, 23b, 23c) and a second portion (24a, 24b, 24c), the second portion further comprising a spacer (25) to prevent the conductors from moving in the portion and such that a clearance space (J) separates the free end of the spacer from an outer periphery of the shaft.

5. Rotor according to claim 4, wherein the first portion (23a, 23b, 23c) comprises insulated electrical conductors (21) separated by the spacer (35) extending into the first portion.

6. Rotor according to one of claims 3 to 5, wherein the insulated electrical conductors (21, 37a, 37b) comprise metal bars (21a), in particular made of copper, covered with an electrical insulator (21b), or electrical cables (37a) covered with an electrical insulator (37b).

7. Rotating electrical machine comprising a rotor according to one of claims 3 to 6.

8. Method for obtaining a rotor for a rotating electrical machine, wherein insulated electrical conductors (21, 37a, 37b) and spacers (25) are inserted into housing elements (22a, 22b, 22c) of a shaft in a radial direction of the shaft, each housing element (22a, 22b, 22c) being in the form of a groove whose cross-section perpendicular to the axial direction comprises a first portion (23a, 23b, 23c) that is substantially rectangular in shape leading to a second portion (24a, 24b, 24c) that is substantially trapezoidal in shape, the second portion leading to the outside in a radial direction, wherein the insulated electrical conductors are inserted into the first portions (23a, 23b, 23c) of the housing elements (22a, 22b, 22c) in the radial direction and the spacers (25, 35) into the second portions (24a, 24b, 24c) of the housing elements (22a, 22b, 22c) in an axial direction to prevent the conductors from moving in the first portion and such that a clearance space separates the free end of the spacer from an outer periphery of the shaft, and wherein the inner ring of a bearing is inserted onto the shaft by shrink-fitting, **characterised in that** each first portion receives a plurality of insulated electrical conductors (21, 37a, 37b) so as to fill the first portion, the size of the small base being determined such that a single insulated electrical conductor (21, 37a, 37b) can be inserted into the first portion (23a, 23b, 23c) in a radial direction of the shaft through the second portion (24a, 24b, 24c).
